# EUROPÄISCHE PATENTANMELDUNG

(11) **EP 3 336 005 A1**
(43) Veröffentlichungstag der Anmeldung: **20.06.2018**
(21) Anmeldenummer: 17189846.3
(22) Anmeldetag: 07.09.2017
(51) Int. Cl.: B65D 71/04, B65D 81/05, B60P 7/08

(54) **AUFNAHMEVORRICHTUNG FÜR EIN ZUGMITTEL**

(30) Priorität: 15.12.2016 DE 202016107010 U
(71) Anmelder: Tolges-Kunststoffverarbeitung GmbH & Co. KG, 34414 Warburg (DE)
(72) Erfinder: Grundkötter, Wilhelm, 34414 Warburg (DE)
(74) Vertreter: Patentanwälte Walther Hinz Bayer PartGmbB

(57) **Zusammenfassung**

Eine Aufnahmevorrichtung (1) für ein Zugmittel (5) dient zur Verhinderung der Beschädigung eines oder mehrerer Gegenstände, die durch das Zugmittel (5) umspannt sind oder zum Schutz des Zugmittels. Sie weist zwei durch ein Scharnier (4) verbundene Seitenteile (2, 3) auf, wobei jedes Seitenteil (2, 3) zumindest ein Mittel zur Aufnahme des Zugmittels aufweist.

## Beschreibung

Die vorliegende Erfindung betrifft eine Aufnahmevorrichtung für ein Zugmittel entweder zur Verhinderung der Beschädigung eines oder mehrerer Gegenstände, die durch das Zugmittel umspannt sind, oder zum Schutz des Zugmittels. Gegenstände können hierbei sein z. B. ein oder mehrere Kartons, eine oder mehrere Kisten, ein oder mehrere Möbelstücke oder Ähnliches, die durch das Zugmittel umspannt sind.

Ein weiterer Anwendungsfall der Aufnahmevorrichtung betrifft den Schutz des Zugmittels vor Beschädigungen durch die Gegenstände selbst, z. B. bei der Ladungssicherung von Gegenständen, z. B. Eisenträgern auf einem LKW. Beschädigungen des Zugmittels, z. B. eines Gurtes, entstehen z. B. durch Grate an den Eisenträgern.

Kisten oder Kartons können einzeln durch ein Zugmittel, z. B. durch einen Gurt, in Bezug auf den Zusammenhalt der Seitenwände gesichert sein. Der Gurt umspannt hierbei die Kiste oder den Karton voll umfänglich. Denkbar ist allerdings auch, mehrere Kartons oder Kisten durch einen Gurt nach Art einer Einheit zusammenzuhalten. Das Zugmittel selbst kann hierbei in Abhängigkeit von dem Material des Kartons oder der Kiste und auch in Abhängigkeit von der Zugkraft auf den Karton oder die Kiste eine nicht unerhebliche Kraft ausüben, die dafür sorgen kann, dass im Bereich, insbesondere der Ecken eines solchen Kartons oder einer Kiste, durch den Gurt Beschädigungen hervorgerufen werden. Gleiches gilt für Möbel oder Möbelstücke, die insbesondere eckig ausgebildet sind.

Die erfindungsgemäße Vorrichtung dient allerdings nicht nur dazu, Beschädigungen durch den Gurt an der Kiste, dem Karton oder dem Möbelstück zu verhindern, sie kann vielmehr auch dazu dienen, zu verhindern, dass bei mehreren nebeneinander angeordneten Kisten, Kartons oder Möbelstücken, diese unmittelbar miteinander in Kontakt stehen und hierdurch Beschädigungen an den Kartons, Kisten oder Möbelstücken hervorgehoben werden. Insofern dienen die Vorrichtungen als Kanten- oder auch als Eckenschutz.

Erfirtdungsgemäß zeichnet sich eine solche Aufnahmevorrichtung gemäß der eingangs genannten Art dadurch aus, dass die Aufnahmevorrichtung zwei durch ein Scharnier verbundene Seitenteile aufweist, wobei ein jedes Seitenteil zumindest ein Mittel zur Aufnahme des Zugmittels aufweist. Dadurch, dass die Seitenteile durch ein Scharnier verbunden sind, besteht die Möglichkeit, dass sich die Vorrichtung als Ecken- oder Kantenschutz im Bereich der Kante, beispielsweise eines Kartons, an die Seitenfläche des Gegenstandes anschmiegt, wobei die Seitenteile Mittel zur Aufnahme eines Zugmittels, z. B. eines Gurtes, aufweisen.

Nach einem besonders vorteilhaften Merkmal ist vorgesehen, dass das Mittel zur Aufnahme des Zugmittels als mindestens ein Schlitz ausgebildet ist, der das Zugmittel, insbesondere den Gurt, geführt durch die Seitenteile, hält. Vorteilhaft ist weiterhin vorgesehen, dass das Mittel zur Aufnahme des Zugmittels zwei beabstandet zueinander, hintereinander in mindestens einem Seitenteil angeordnete Schlitze aufweist. Hierdurch wird erreicht, dass das Zugmittel, und hier insbesondere der Gurt, durch die Seitenteile geführt ist, wenn nämlich die Erstreckung des Schlitzes der Breite des Gurtes entspricht. Um das Einführen des Gurtes in den Schlitz zu erleichtern, ist vorgesehen, dass der Schlitz an einer Schmalseite eine Öffnung aufweist, sodass der Gurt seitlich in den Schlitz eingeschoben werden kann.

Bei zwei hintereinander angeordneten Schlitzen weisen die Schlitze vorteilhaft jeweils an der gegenüberliegenden Schmalseite eine Öffnung auf. Hierdurch wird verhindert, dass der Gurt nicht unbeabsichtigt aus den Schlitzen herausgelangen kann.

In diesem Zusammenhang kann nach einem weiteren Merkmal der Erfindung vorgesehen sein, dass der Schlitz im Bereich der Öffnung eine den Schlitz verengende Nase zeigt. Durch die Nase im Öffnungsbereich des Schlitzes an dessen Schmalseite wird eine erhöhte Sicherheit gegen Herausrutschen des Zugmittels, z. B. des Gurtes bewirkt.

Nach einem weiteren Merkmal der Erfindung ist vorgesehen, dass das Scharnier als Filmscharnier ausgebildet ist. Die Aufnahmevorrichtung selbst, umfassend die beiden Seitenteile, ist vorteilhaft aus einem Kunststoff, beispielsweise aus einem PE, hergestellt. Insofern kann das Filmscharnier aus eben dem gleichen Werkstoff bestehen.

Ein weiteres Merkmal der Erfindung zeichnet sich dadurch aus, dass die Seitenteile der Aufnahmevorrichtung zumindest auf einer Seite vorteilhaft auf beiden Seiten mindestens einen Stempel nach Art eines Vorsprungs aufweisen. D.h., dass im angelegten Zustand der Vorrichtung im Eckbereich, beispielsweise an einem Karton oder einer Kiste das Seitenteil mit den Stempeln an der Wand oder Seitenfläche der Kiste oder des Kartons aufsteht. Da diese Stempel außerhalb des Eckbereiches, also außerhalb des Scharnierbereiches, angeordnet sind, wird hierdurch gewährleistet, dass insbesondere die Kante einen Abstand zum Scharnier aufweist, und hierdurch die Kante nicht beschädigt werden kann. Gleichfalls wird hierdurch erreicht, dass der Gurt als Zugmittel im Bereich der Ecken nicht unmittelbar an dem Gegenstand, z. B. den Stahlträgern, anliegt.

Darüber hinaus dienen die Mehrzahl an Stempeln dazu, den Gurt zu führen. Insofern sind die Stempel mit einem Abstand auf dem jeweiligen Seitenteil angeordnet, der in etwa der Breite des Gurtes entspricht. Hieraus wird deutlich, dass sich mindestens ein Stempel außerhalb des Bereichs des Gurtbandes im an der Vorrichtung angelegten Zustand des Gurtbandes befindet und auch hierdurch der Gurt geführt wird.

Anhand der Zeichnungen wird die Erfindung nachstehend näher erläutert.
- Fig. 1: zeigt die Aufnahmevorrichtung zur Verhinderung der Beschädigung, z. B. eines Kartons in einer perspektivischen Darstellung;
- Fig. 2: zeigt eine Seitenansicht der Aufnahmevorrichtung (Kantenschutzecke) gemäß Fig. 1;
- Fig. 3: zeigt einen Karton mit einem angedeuteten umlaufenden Gurtband und einer Aufnahmevorrichtung gemäß Fig. 1;
- Fig. 4: zeigt eine Ansicht von oben auf den Karton gemäß Fig. 3.

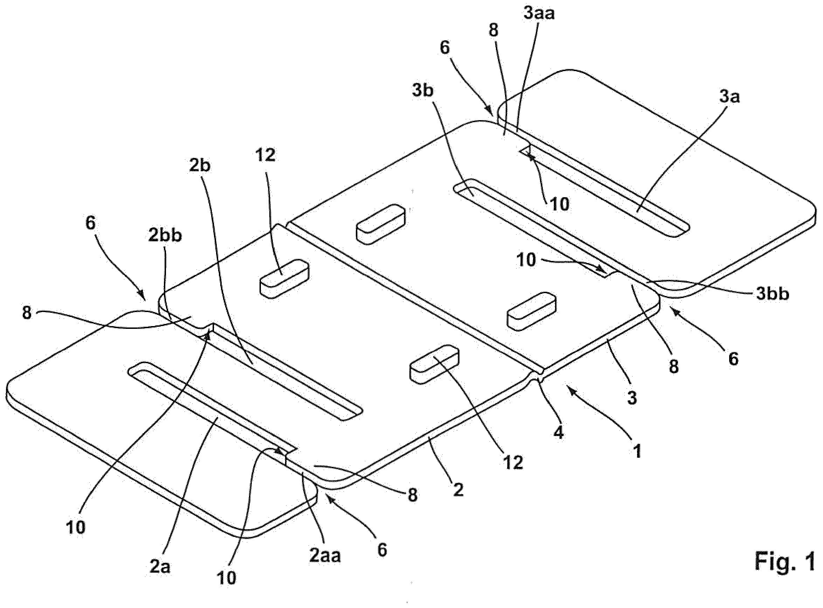

Die Aufnahmevorrichtung 1 zur Verhinderung der Beschädigung eines oder mehrerer Gegenstände, z. B. eines oder mehrerer Kartons, eines oder mehrerer Kisten oder eines Möbels oder Möbelstücks durch ein den oder die Gegenstände umspannendes Zugmittel, im Folgenden kurz Kantenschutzecke genannt, umfasst gemäß Fig. 1 zwei Seitenteile 2 und 3, die durch ein Filmscharnier 4 miteinander verschwenkbar in Verbindung stehen. Ein jedes Seitenteil 2, 3 zeigt zwei Schlitze 2a, 2b; 3a, 3b, wobei die jeweiligen Schlitzpaare 2a, 2b und 3a, 3b in einem geringen Abstand in Längsrichtung der Kantenschutzecke zueinander angeordnet sind. Ein jeder Schlitz 2a, 2b; 3a, 3b weist im Bereich der Schmalseite des Schlitzes (Pfeil 6) eine Öffnung 2aa, 2bb; 3aa, 3bb auf, wobei im Bereich einer solchen Öffnung in der Schmalseite des Schlitzes, durch das jeweilige Seitenteil im Bereich einer jeden Öffnung eine Nase 8 vorgesehen ist. Durch die Nase 8 wird die Breite im Bereich der Öffnung 2aa, 2bb; 3aa, 3bb vermindert, wobei durch die Nase 8 zum Inneren des Schlitzes hin, der der Aufnahme des Gurtes dient, ein Anschlag 10 gebildet wird, der der Führung des Gurtes in dem jeweiligen Schlitz 2a, 2b; 3a, 3b dient. Durch die Anordnung zweier Schlitze hintereinander auf jedem Seitenteil 2, 3 wird erreicht, dass das Zugmittel, im vorliegenden Falle ein Gurt 5 sicher durch die Kantenschutzecke geführt ist.

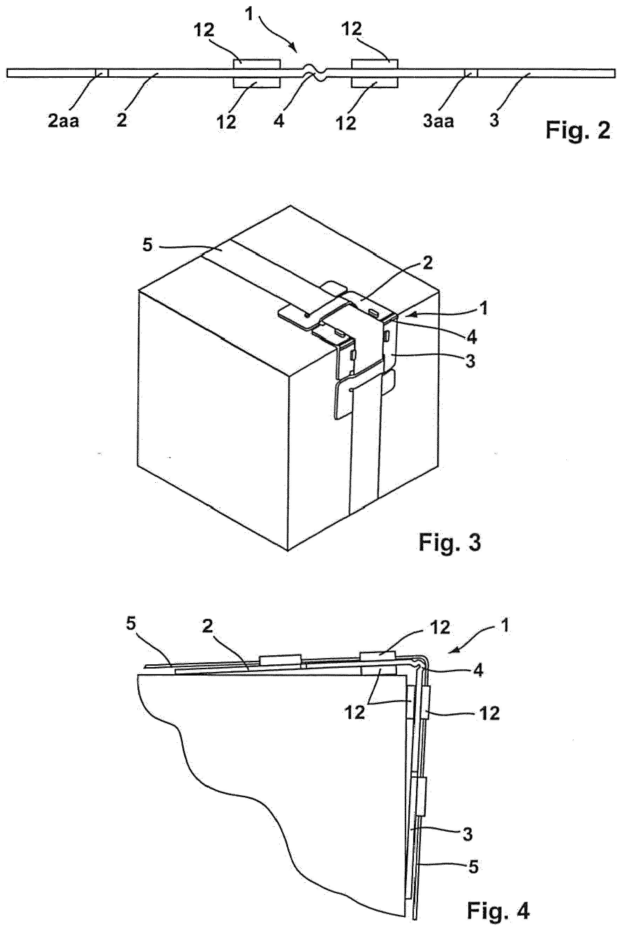

Darüber hinaus weist ein jedes Seitenteil 2, 3 der Aufnahmevorrichtung 1 in Verlängerung zu den Schlitzen zwei beabstandet zueinander angeordnete Stempel 12 auf, wobei der Abstand der Stempel derart ist, dass zwischen den Stempeln der Gurt verläuft, also durch die Stempel geführt wird. Solche Stempel 12 befinden sich auf beiden Seiten eines jeden Seitenteiles. Die Stempel dienen nicht nur der Führung des Gurtes, sondern darüber hinaus als Auflage der Kantenschutzecke auf dem jeweiligen Gegenstand (siehe Fig. 4). Durch die Stempel wird insofern verhindert, dass im Bereich der Ecke des Gegenstandes, die Kantenschutzecke selbst mit dem Gegenstand in Kontakt gerät. D.h., dass das Filmscharnier 4 beabstandet zum Gegenstand im Bereich der Ecke verläuft.

Wie bereits ausgeführt, kann die Aufnahmevorrichtung 1 als Kantenschutzecke darüber hinaus auch, z. B. bei der Ladungssicherung von Stahlträgern, dem Schutz des Gurtes dienen. Die Stempel sorgen in diesem Zusammenhang dafür, dass der Gurt nicht unmittelbar an den Stahlträgern anliegt und dient insofern dem Schutz des Gurtes vor z. B. Beschädigungen durch Grate an den Stahlträgern.

Das Material der Stempel 12 kann unterschiedlich sein zu dem der beiden Seitenteile 2, 3, die zusammen mit dem Filmscharnier 4 den Kantenschutz bilden. Insbesondere kann vorgesehen sein, dass die Stempel aus einem weicheren Material ausgebildet sind, als die Kantenschutzecken. Dies vor dem Hintergrund, um zu verhindern, dass durch die Stempel eine Beschädigung der Kiste oder Kartons oder allgemein des Gegenstandes bewirkt wird. Der Gegenstand kann hierbei auch ein Möbelstück sein, das durch den Kantenschutz, insbesondere im Eckbereich, geschützt werden soll. Die Stempel sind, wie bereits ausgeführt, vorteilhaft auf jeder Seite des jeweiligen Seitenteiles angeordnet. D.h., dass die Kantenschutzecke mit beiden Seiten benutzt werden kann. Hierbei dienen dann die auf der äußeren Seite der Kantenschutzecke angeordneten Stempel der Führung des Gurtes, die auf der Innenseite angeordneten Stempel stehen auf dem Gegenstand auf, wie sich dies in Anschauung von Fig. 4 ergibt.

### Bezugszeichenliste:

- 1: Aufnahmevorrichtung (Kantenschutzecke)
- 2: Seitenteil
- 2a: Schlitz
- 2aa: Öffnung
- 2b: Schlitz
- 2bb: Öffnung
- 3: Seitenteil
- 3a: Schlitz
- 3aa: Öffnung
- 3b: Schlitz
- 3bb: Öffnung
- 4: Filmscharnier
- 5: Gurt (Zugmittel)
- 6: Pfeil
- 8: Nase
- 10: Anschlag (gebildet durch die Nase)
- 12: Stempel

## Patentansprüche

1. Aufnahmevorrichtung (1) für ein Zugmittel entweder zur Verhinderung der Beschädigung eines oder mehrerer Gegenstände, die durch das Zugmittel umspannt sind oder zum Schutz des Zugmittels, wobei die Aufnahmevorrichtung (1) zwei durch ein Scharnier verbundene Seitenteile (2, 3) aufweist, wobei jedes Seitenteil (2, 3) zumindest ein Mittel zur Aufnahme des Zugmittels aufweist.

2. Aufnahmevorrichtung (1) nach Anspruch 1,
**dadurch gekennzeichnet,**
**dass** das Zugmittel als Gurt (5) ausgebildet ist,

3. Aufnahmevorrichtung (1) nach Anspruch 1 oder 2,
**dadurch gekennzeichnet,**
**dass** das Mittel zur Aufnahme des Zugmittels als mindestens ein Schlitz (2a, 2b; 3a, 3b) ausgebildet ist.

4. Aufnahmevorrichtung (1) nach Anspruch 1,
**dadurch gekennzeichnet,**
**dass** das Mittel zur Aufnahme des Zugmittels zwei Schlitze (2a, 2b; 3a, 3b) beabstandet zueinander hintereinander in einem Seitenteil (2, 3) angeordnet, aufweist.

5. Aufnahmevorrichtung (1) nach einem der Ansprüche 3 oder 4,
**dadurch gekennzeichnet,**
**dass** der Schlitz (2a, 2b; 3a, 3b) an der Schmalseite (Pfeil 6) eine Öffnung (2aa, 2bb; 3aa, 3bb) aufweist.

6. Aufnahmevorrichtung (1) nach Anspruch 4 oder 5,
**dadurch gekennzeichnet,**
**dass** bei zwei hintereinander angeordneten Schlitzen (2a, 2b; 3a, 3b) die Schlitze (2a, 2b; 3a, 3b) jeweils an der gegenüberliegenden Schmalseite jeweils eine Öffnung (2aa, 2bb; 3aa, 3bb) aufweisen.

7. Aufnahmevorrichtung (1) nach einem der voranstehenden Ansprüche 3 bis 6,
**dadurch gekennzeichnet,**
**dass** der Schlitz im Bereich der Öffnung (2aa, 2bb; 3aa, 3bb) eine den Schlitz (2a, 2b; 3a, 3b) verengende Nase (8) aufweist.

8. Aufnahmevorrichtung (1) nach einem der voranstehenden Ansprüche,
**dadurch gekennzeichnet,**
**dass** das Scharnier als Filmscharnier (4) ausgebildet ist.

9. Aufnahmevorrichtung (1) nach einem der voranstehenden Ansprüche,
**dadurch gekennzeichnet,**
**dass** die Seitenteile (2, 3) zumindest auf einer Seite, vorzugsweise auf beiden Seiten, mindestens einen Stempel (12) nach Art eines Vorsprungs aufweisen.

10. Aufnahmevorrichtung (1) nach Anspruch 9,
**dadurch gekennzeichnet,**
**dass** der mindestens eine Stempel (12) sich außerhalb des Bereichs des Zugmittels befindet.

11. Aufnahmevorrichtung (1) nach einem der Ansprüche 9 oder 10,
**dadurch gekennzeichnet,**
**dass** durch eine Mehrzahl an Stempeln (12) das Zugmittel seitlich geführt ist.
